# EUROPÄISCHE PATENTSCHRIFT

(11) **EP 2 095 441 B1**
(45) Veröffentlichungstag und Bekanntmachung des Hinweises auf die Patenterteilung: **11.08.2010**
(21) Anmeldenummer: 07847102.6
(22) Anmeldetag: 02.11.2007
(51) Int. Cl.: H01L 41/09

(54) **ULTRASCHALLANTRIEB**
ULTRASOUND DRIVE
ENTRAÎNEMENT À ULTRASONS

(30) Priorität: 27.11.2006 DE 102006055923; 20.02.2007 DE 102007008252
(43) Veröffentlichungstag der Anmeldung: 02.09.2009
(73) Patentinhaber: Physik Instrumente (PI) GmbH & Co. KG, 76228 Karlsruhe (DE)
(72) Erfinder: WISCHNEWSKIJ, Wladimir, 76337 Waldbronn (DE); VYSHNEVSKYY, Oleksiy, 76744 Wörth (DE)
(74) Vertreter: Meissner, Bolte & Partner
(86) Internationale Anmeldenummer: PCT/EP2007/061817
(87) Internationale Veröffentlichungsnummer: WO 2008/064974

(56) Entgegenhaltungen:
- DE-A1- 19 938 954
- JP-A- 11 299 269
- JP-A- 60 174 074
- JP-A- 63 316 676

## Beschreibung

Die Erfindung gehört zum Gebiet der hochpräzisen Ultraschallsystemen für Linear- und Drehantrieb und kann in Mikroskoptischen, in Stelltischen zur Fertigung integrierter Schaltkreise, in präzisen optischen Systemen und in anderen Vorrichtungen eingesetzt werden, wo eine hohe Positioniergenauigkeit und eine hohe Laufruhe (Gleichmäßigkeit der Bewegung) gefordert werden.

Bekannt sind Ultraschallantriebssysteme (z. B. DE 199 38 954 A1), in denen ein Ultraschalloszillator die Bewegung einer beweglichen Plattform hervorruft. In diesen Systemen ist eine Friktionsschicht direkt auf der Seitenfläche der Plattform angeordnet. Zwischen der Seitenfläche der Plattform und der Friktionsschicht befindet sich eine Dämpfungsschicht.

Der Nachteil eines solchen Systems ist der, dass die dünne Dämpfungsschicht nicht vollständig die Plattform vom schwingenden Ultraschalloszillator abkoppeln kann. Deshalb werden in der Plattform Ultraschallwellen erzeugt, die sich in ihr ausbreiten können. Diese Wellen bewirken Schwingungen der Oberfläche der Plattform. Es ist nicht möglich, die Schwingungsamplitude der Oberfläche unter 50 Nanometer zu bringen. Dadurch ist es unmöglich, die Position der sich bewegenden Plattform genauer zu bestimmen. Dies verringert die Positioniergenauigkeit der sich bewegenden Plattform und verschlechtert die Laufruhe. Besonders trifft dies bei niedrigen Geschwindigkeiten der sich bewegenden Plattform zu.

Außerdem dringen die sich in der Plattform und der Grundplatte des Antriebs ausbreitenden Ultraschallwellen in die Kugellager ein. Dies führt zu verstärktem Verschleiß und als dessen Folge zum weiteren Verlust der Positioniergenauigkeit. Dadurch wird die Lebensdauer des Antriebssystems verkürzt.

Außerdem bewirkt die in der sich bewegenden Plattform sich ausbreitende Ultraschallwelle einen Energieabfluss des Ultraschalloszillators. Das führt zu zusätzlichen Energieverlusten.

Außerdem erzeugt die in das Kugellager eindringende Ultraschallwelle niederfrequente Schwingungen der Kugeln im Lager. Das führt zu niederfrequenten akustischen Geräuschen durch das Kugellager.

Bei Verwendung eines solchen Ultraschallantriebs in präzisen optischen Systemen führen die Ultraschallschwingungen der optischen Linsen zur Defokussierung der Abbildung.

Bekannt ist weiterhin ein Ultraschallantriebssystem (siehe EP 1 267 425 A2), in dem der Ultraschalloszillator eine Bewegung der beweglichen Plattform mit dämpfenden Öffnungen in ihr bewirkt. Die Öffnungen können eine längliche, eine runde, ovale oder auch eine andere Form aufweisen und verhindern die Ausbreitung von Ultraschallwellen in der Plattform.

Nachteilig bei diesem Antriebssystem ist, dass die Dämpfungsöffnungen die Konstanz der durch den Ultraschalloszillator erzeugten Kraft verschlechtern.

Dies destabilisiert die Funktion des Antriebssystems, verringert die Positioniergenauigkeit der beweglichen Plattform und verschlechtert die Laufruhe. Bekannt ist auch ein Ultraschallantriebssystem (z. B. DE 199 38 954 A1), bei dem zwei gegenüberliegend angeordnete Ultraschalloszillatoren eine Bewegung der Friktionsschiene, die Quernuten aufweist, bewirken.

Nachteilig für dieses Antriebssystem ist, wie auch im vorherigen Fall, dass wegen der Quernuten, die durch den Ultraschalloszillator erzeugte Kraft variabel wird.

Dies destabilisiert die Funktion des Antriebssystems, verringert seine Positioniergenauigkeit und verschlechtert die Laufruhe der Friktionsschiene.

Alle oben beschriebenen Antriebssysteme ermöglichen keine Auflösung größer als 50 Nanometer. Dies engt den Anwendungsbereich solcher Antriebe wesentlich ein.

Außerdem erfolgt bei allen angeführten Antriebssystemen eine starke akustische Kopplung des Ultraschalloszillators mit der beweglichen Plattform oder Friktionsschiene. Diese starke akustische Kopplung führt zum Auftreten von nah zueinander liegenden parasitären Nullen in der Frequenz-Phasenabhängigkeit der Oszillatoren.

Das hat eine instabile Funktion der Erregereinrichtung zur Folge, die bevorzugt als selbsterregender Generator arbeitet.

Aufgabe der Erfindung ist die Bereitstellung eines verbesserten Ultraschallantriebes, der einen oder mehrere der folgenden Vorteile bietet: eine erhöhte Positioniergenauigkeit, eine verbesserte Laufruhe (Gleichmäßigkeit der Bewegung), eine höhere Fokussiergenauigkeit des optischen Systems, eine längere Lebensdauer, einen verringerten Energieverbrauch, geringere erzeugte Geräusche und die Möglichkeit zum Aufbau von stabilen Erregervorrichtungen der Oszillatoren, die als selbsterregende Generatoren arbeiten.

Die Erfindung schließt den Gedanken der Schaffung eines hochpräzisen Ultraschallantriebs in einer solchen konstruktiven Ausführung ein, dass durch spezielle Konstruktionen seiner Hauptteile es möglich ist, eine vollständige Isolierung der beweglichen Haltevorrichtung und der anderen Antriebsteile von den Ultraschallschwingungen zu realisieren, wobei die hohe Auflösung (Genauigkeit) des Antriebs erhalten bleibt.

Die gestellte Aufgabe wird durch einen Antrieb mit den Merkmalen des Anspruchs 1 gelöst.

In dem vorgeschlagenen hochpräzisen Antrieb können die dünne elastische Platte der zentralen Schicht zum Beispiel aus Stahl, Berylliumbronze, widerstandsfähigem Kunststoff oder einem anderen elastischen Material bestehen, die Friktionsschichten als dünne Platten aus Oxidkeramik, Metallkeramik, monokristallinem Material, wärmebehandelten Stahl oder einem anderen abriebfesten Material ausgeführt werden, die viskosen Schichten als Schichten klebenden Gummis, viskosen klebenden Polymermaterials, klebenden Papiers oder aus einem anderen viskosen klebenden Material ausgeführt werden, die Friktionsschichten als dünne Platten aus Oxidkeramik, Metallkeramik, monokristallinem Material, wärmebehandeltem Stahl oder einem anderen abriebfesten Material ausgeführt sein und die elastischen Schichten als Platten oder Ringe aus Stahl, Titan, Kupfer, Aluminium, Oxidkeramik oder einem anderen elastischen Material ausgeführt sind.

In anderen Varianten des vorgeschlagenen Antriebs können die elastischen Schichten Teile der Friktionsschichten sein. Dies vereinfacht die Antriebskonstruktion.

In weiteren Varianten des vorgeschlagenen Antriebs kann jeder der Ultraschalloszillatoren in gegenüberstehenden elastischen Halterungen angeordnet sein, deren äußere Teile den Ultraschalloszillator an seinen gegenüberliegenden Stirnflächen in seinen Maxima der Schwingungsgeschwindigkeiten halten, wobei die zentralen Teile der elastischen Träger an der Haltevorrichtung des Oszillators befestigt sind und wobei die elastischen Träger so ausgeführt sind, dass sich die Querschnittsfläche jedes Trägers vom äußeren Teil des Trägers hin zum zentralen Teil des Trägers erhöht. Dies verhindert Ultraschallschwingungen der Grundplatte des Antriebs.

Außerdem kann in dem vorgeschlagenen hochpräzisen Ultraschallantrieb jeder der Oszillatoren in zwei oder in vier elastischen Trägerrahmen befestigt werden, die parallel zu den Seitenflächen des Oszillators angeordnet sind, wobei jeder Trägerrahmen an der Seitenfläche der piezoelektrischen Platte im Minimum seiner Schwingungsgeschwindigkeiten und der Haltevorrichtung des Oszillators befestigt ist. Dies verhindert Ultraschallschwingungen in der Grundplatte des Antriebes und verbessert wesentlich die Querstabilität der Ultraschalloszillatoren.

In dem vorgeschlagenen Antrieb kann die Erregervorrichtung der Ultraschalloszillatoren als selbsterregender Generator ausgeführt sein, dessen Erregerfrequenz durch die mechanischen Parameter eines der aktiven Ultraschalloszillatoren vorgeben wird, wobei die anderen Ultraschalloszillatoren mit der Erregervorrichtung als passive Elemente verbunden sind. Dies erhöht die Funktionsstabilität des Antriebs.

Zusätzlich kann die Erregervorrichtung mit einem analog geregelten PWM-Wandler für Gleichspannung ausgestattet sein. Dadurch ist die Realisierung einer Analogsteuerung für den Antrieb möglich.

Der selbsterregende Generator der Erregervorrichtung kann einen symmetrischen PWM-Controller oder einen analog gesteuerten symmetrisch phasenschiebenden Controller einschließen. Dies erhöht die Schnelligkeit des Antriebs.

Der hochpräzise Ultraschallantrieb kann mit einem hochauflösenden Meßsystem und einem Prozessorregler für Lage oder Geschwindigkeit der beweglichen Haltevorrichtung ausgestattet sein. Dies ermöglicht eine hochpräzise Positionierung oder eine hochpräzise stabile Geschwindigkeit des Antriebs.

Vorteile und Zweckmäßigkeiten der Erfindung ergeben sich im Übrigen aus der Beschreibung von Ausführungsvarianten der Erfindungen anhand der Zeichnungen. Von diesen zeigen:
- Fig. 1: eine Gesamtdarstellung eines hochpräzisen Ultraschallantriebes,
- Fig. 2: eine Friktionsschiene des Ultraschallantriebes nach Fig. 1,
- Fig. 3: eine weitere Ausführung der Friktionsschiene in einer weiteren Aus- führung eines Ultraschallantriebes,
- Fig. 4: eine Abwandlung der Friktionsschiene gegenüber Fig. 3,
- Fig. 5: eine Variante des Ultraschalloszillators eines erfindungsgemäßen Antriebes,
- Fig. 6: eine Darstellung zur Verdeutlichung des Deformationsverhaltens einer Platte des Ultraschalloszillators,
- Fig. 7: eine weitere Darstellung zur Verdeutlichung des Deformationsverhaltens,
- Fig. 8: eine Befestigung des Ultraschalloszillators in eine Haltevorrichtung,
- Fig. 9: eine Darstellung zur Verdeutlichung des Deformationsverhaltens der Platte des Ultraschalloszillators,
- Fig. 10: eine weitere Variante der Befestigung des Ultraschalloszillators in der Haltevorrichtung,
- Fig. 11: einen Ultraschalloszillator mit an ihm befestigten Trägerrahmen,
- Fig. 12: Varianten der Befestigung des Trägerrahmens an der Platte des Ultraschalloszillators,
- Fig. 13: die Deformation des Oszillators mit auf ihm befestigten Trägerrah- men,
- Fig. 14: einen erfindungsgemäßen Ultraschallantrieb mit einer optischen Linsengruppe,
- Fig. 15: eine Befestigungsvariante des erfindungsgemäßen Ultraschallantrie- bes,
- Fig. 16: eine weitere Befestigungsvariante des erfindungsgemäßen Ultra- schallantriebes,
- Fig. 17: die elektrische Schaltung einer Erregervorrichtung,
- Fig. 18: eine weitere elektrische Schaltung einer Erregervorrichtung,
- Fig. 19: eine weitere elektrische Schaltung einer Erregervorrichtung und
- Fig. 20: eine weitere Darstellung zur elektrischen Schaltung des vorgeschla- genen Ultraschallantriebes.

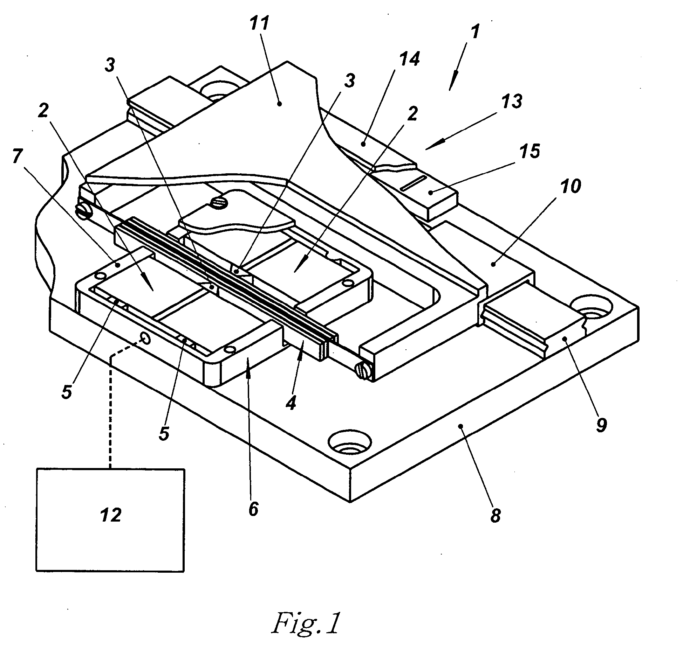

Ein hochpräziser Ultraschallantrieb 1 (siehe Fig. 1) besteht aus zwei oder mehreren gegenüberliegend angeordneten baugleichen Ultraschalloszillatoren 2 mit Friktionselementen 3. Zwischen den Ultraschalloszillatoren 2 befindet sich eine mehrschichtige Friktionsschiene 4, an die mittels elastischer Elemente 5 die Friktionselemente 3 der Oszillatoren 2 angepresst werden. Die Oszillatoren 2 sind in einer Halterung 6 angeordnet und werden in Längsrichtung von Wänden 7 festgehalten.

Der Antrieb 1 umfasst eine Grundplatte 8, auf der eine oder mehrere Führungsschienen 9 mit einem oder mehreren Schlitten 10 angeordnet sind, die mit der beweglichen Haltevorrichtung 11 verbunden sind. Die Haltevorrichtung 11 dient zur Anordnung oder Befestigung der verschiebbaren Teile (in der Fig. 1 nicht gezeigt).

Zur Erregung der Ultraschalloszillatoren 2 besitzt der Antrieb eine Erregervorrichtung 12. Der Antrieb 1 kann zudem, wie in Fig. 1 gezeigt, ein hoch auflösendes Meßsystem 13 mit einem Messlineal 14 und einem Lesekopf 15 einschließen.

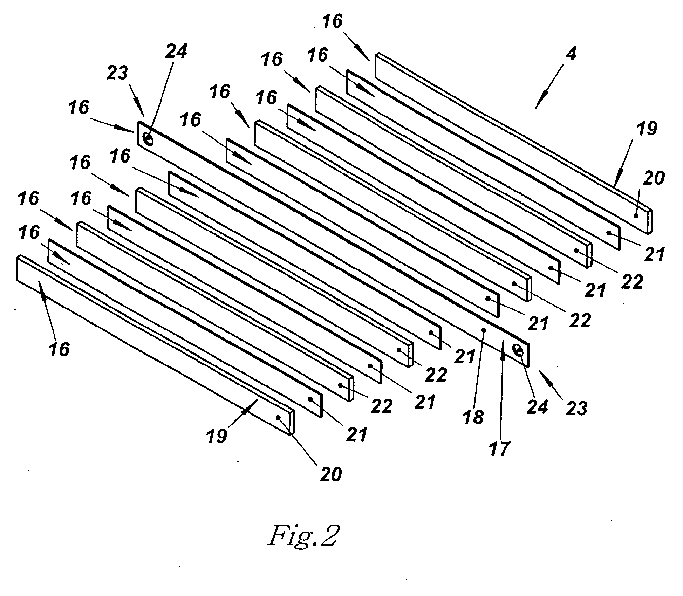

Fig. 2 zeigt die Konstruktion einer als mehrschichtiger Stab ausgeführten Friktionsschiene 4. Die Friktionsschiene 4 besteht aus einer ungeraden Zahl längs angeordneter alternierenden Schichten 16. Eine dünne elastische Platte 18 stellt die zentrale Schicht 17 dar. Die zwei äußeren Schichten 19 stellen als Platten 20 ausgeführte Friktionsschichten dar.

Zwischen der zentralen Schicht 17 (18) und den äußeren Friktionsschichten 19 (20) befinden sich viskose Schichten 21 und elastische Schichten 22. Die Platte 18 weist auf den zwei gegenüberliegenden Seiten 23 Befestigungspunkte 24 auf, an denen die Friktionsschiene 4 mit der beweglichen Haltevorrichtung 11 befestigt ist.

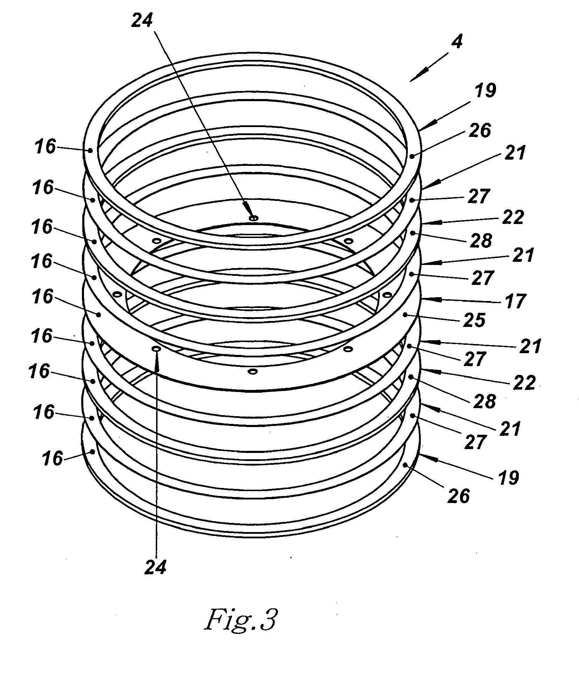

Eine Variante der Erfindung sieht eine drehende Konstruktion vor (in Fig. 1 und 2 nicht gezeigt). In diesem Fall weist die Friktionsschiene 4 einen mehrschichtigen Ring (siehe Fig. 3) auf, in dem die zentrale Schicht 17 als dünne elastische Scheibe 25 und die Friktionsschichten 19, die viskosen Schichten 21 und die elastischen Schichten 22 als Ringe 26, 27, 28 ausgeführt sind.

Die Platte 18 oder die Scheibe 25 (als jeweilige zentrale Schicht 17) besteht aus Stahl, Berylliumbronze, elastischem Kunststoff oder aus einem anderen elastischen Material. Die Dicke der Platte 18 oder der Scheibe 25 wird etwa gleich 0,01 λ gewählt, wobei die Länge λ der im Oszillator 2 erregten Ultraschallwelle ist.

Die Platten 20 oder die Ringe 26 (Friktionsschichten 19) bestehen aus Oxidkeramik, Metallkeramik, monokristallinem Material, wärmebehandelten Stahl oder einem anderen abriebfesten Material. Die Dicke der Platten 20 oder der Scheiben 26 wird etwa gleich 0,1 λ gewählt.

Die viskosen Schichten 21 (27) werden als Schichten klebenden Gummis, viskosen klebenden polymeren Materials, aus klebenden Papierbändern oder aus einem beliebigen anderen viskosen klebenden Material hergestellt. Die Dicke der viskosen Schichten 21 (27) wird etwa gleich 0,005 λ gewählt.

Die elastischen Schichten 22 (28) werden als Platten oder als Ringe aus Stahl, Kupfer, Aluminium, Oxidkeramik, oder einem anderen elastischen Material gefertigt. Die Dicke dieser Schichten wird etwa gleich 0,05 λ gewählt.

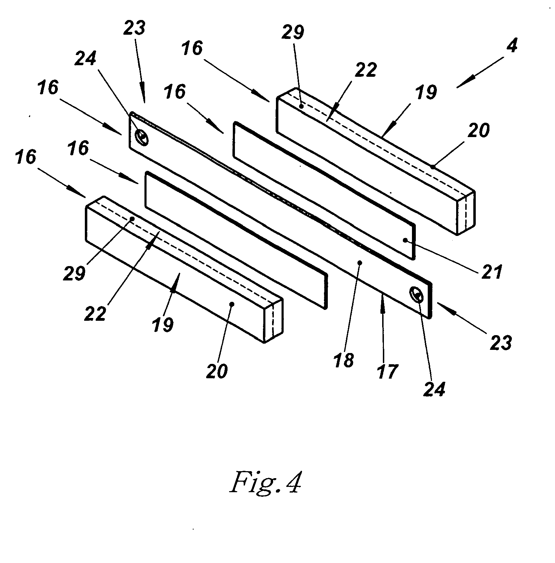

Fig. 4 zeigt eine Variante der Friktionsschiene 4, in der die elastischen Schichten 22 als Teile 29 der Platte 20 der Friktionsschichten 19 ausgeführt sind.

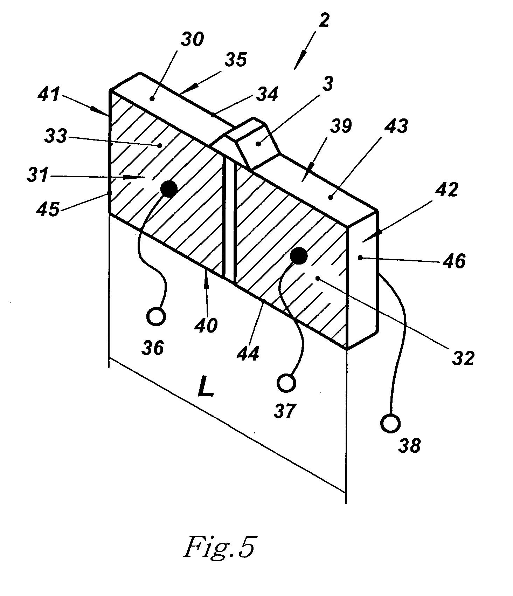

Fig. 5 zeigt eine Variante des Ultraschalloszillators 2 des erfindungsgemäßen Antriebs 1. Der Oszillator 2 ist in Form einer piezoelektrischen Platte 30 mit zwei Erregerelektroden 31, 32 auf einer ihren großen Seiten 33 und der Sammelelektrode 34 auf der anderen großen Seite 35. Die Elektroden 31, 32, 34 haben die Ausgänge 36, 37, 38. Die Platte 30 ist senkrecht zu den Elektroden 31, 32 und 34 polarisiert. Im zentralen Teil einer der Seitenflächen 39 der Platte 30 befindet sich das Friktionselement 3 des Oszillators 2. Die andere Seitenfläche 40 der Platte 30 ist frei. Die Platte 30 besitzt die Stirnflächen 41 und 42. Die Seiten 39, 40 und 41, 42 weisen die Flächen 43, 44 und 45, 46 auf.

Im Betrieb des Antriebs wird im Oszillator 2 eine asymmetrische Ultraschallstehwelle erregt, deren Wellenlänge λ gleich oder ein Vielfaches der Länge L der Platte 30 längs zur Seitenfläche 39 oder 40 ist (siehe Fig. 5).

Die vorgeschlagene Erfindung sieht auch andere konstruktive Ausführungen der Ultraschalloszillatoren 2 vor, die mehrere Erregerelektroden 31 und mehrere Erregerelektroden 32 enthalten. Diese Konstruktionen der Oszillatoren 2 werden in der Beschreibung nicht weiter betrachtet.

In allen Ausführungsbeispielen des erfindungsgemäßen Antriebs sind die Schichten 16 der mehrschichtigen Friktionsschiene 4 parallel zu den Seitenflächen 39 und 40 der Platte 30 des Oszillators 2 angeordnet.

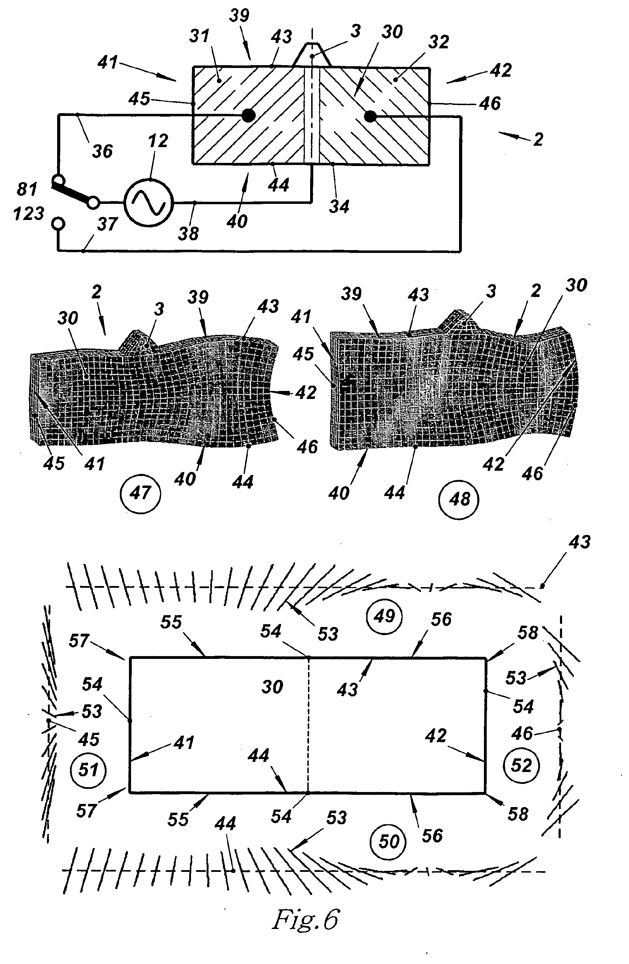

Die Positionen 47, 48 in der Fig. 6 zeigen die Deformation der Platte 30 des Oszillators 2. Die Grafiken zeigen sie mit einer Zeitverschiebung um eine halbe Schwingungsperiode des Oszillators 2. Die Positionen 49, 50, 51, 52 zeigen die Bewegungsbahnen 53 der Punkte 54 der Oberflächen 43, 44, 45, 46 der Seiten 39, 40, 41, 42 der Platte 30. Die Oberflächen 43, 44 haben Minima (55, 56) der Schwingungsgeschwindigkeiten. Die Oberflächen 45, 46 haben Maxima (57, 58) der Schwingungsgeschwindigkeiten.

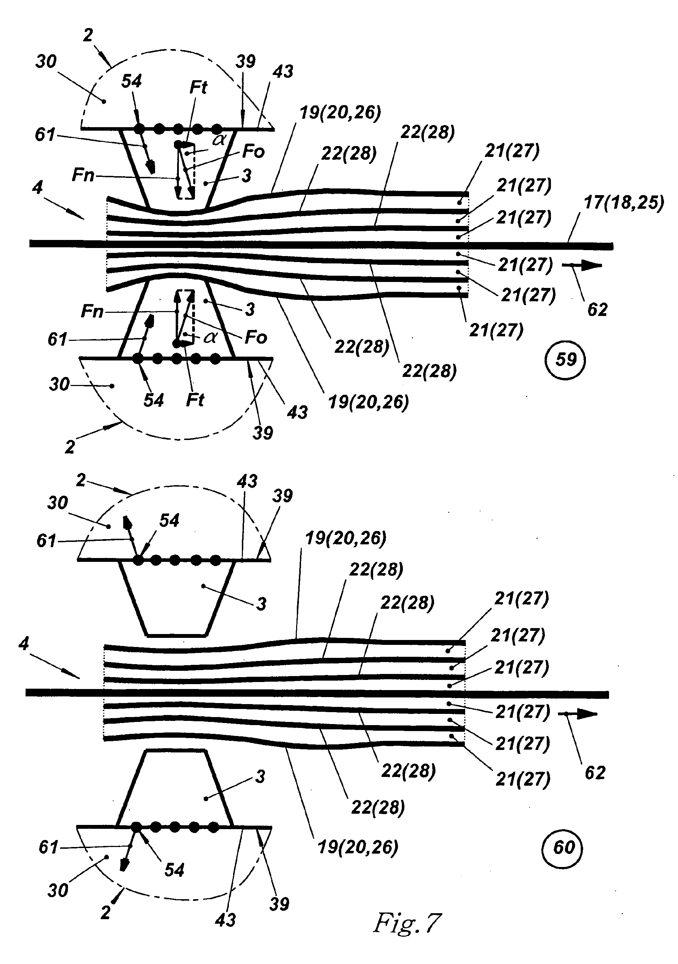

Ziffer 59, in Fig. 7 zeigt die Deformation der Friktionsschiene 4 bei maximaler Dehnung der Platte 30 des Oszillators 2. Ziffer 60 in Fig. 7 zeigt die Deformation der Friktionsschiene 4 bei maximaler Kompression der Platte 30 des Oszillators 2.

Die Grafiken zeigen den Zustand bei einer Zeitverschiebung um eine halbe Schwingungsperiode des Oszillators 2. Der Pfeil 61 zeigt die Bewegungsrichtung der Punkte 50 bei Kompression und Dehnung der Platte 30 des Oszillators 2.

Im Zusammenspiel von Oszillator 2 mit der Friktionsschiene 4 bildet sich die geneigte Kraft Fₒ aus. Diese Kraft Fₒ besteht aus der durch die elastischen Elemente 5 erzeugten Anpresskraft und aus der vom Ultraschalloszillator 2 erzeugten Kraft. Der Neigungswinkel der Kraft Fₒ zur Friktionsschicht 19 (20, 26) ist α. Diese Kraft kann in die Normalkraft Fₙ und die Tangentialkraft Fₜ zerlegt werden. Der Pfeil 62 gibt dabei die Bewegungsrichtung der Friktionsschiene 4 an.

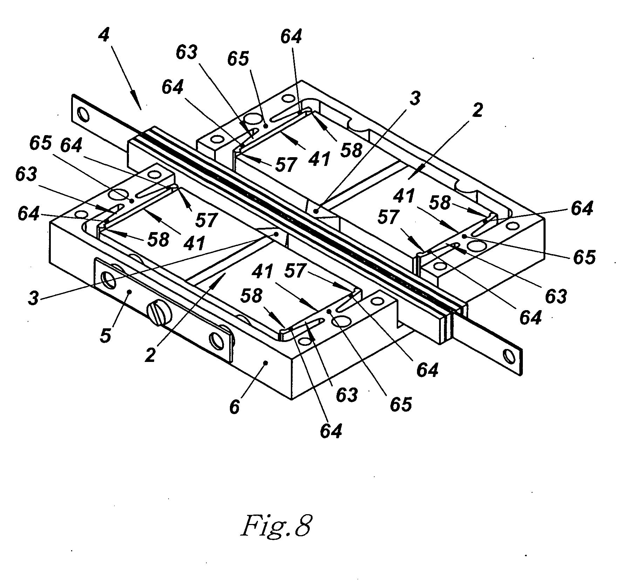

Fig. 8 zeigt eine der Befestigungsvarianten des Oszillators 2 in der Haltevorrichtung 6. In dieser Variante wird der Oszillator 2 durch die zwei einander gegenüberstehenden (C-förmigen) elastischen Träger 63 gehalten. Die äußeren Teile 64 der elastischen Träger 63 halten den Oszillator 2 an seinen gegenüberliegenden Stirnflächen 41, 42 in seinen Maxima der Schwingungsgeschwindigkeiten 57, 58. Die zentralen Teile 65 der elastischen Träger 63 sind an der Haltevorrichtung 6 des Oszillators 2 befestigt.

Die elastischen Träger 63 können aus verschiedenen Arten von elastischen Kunststoffen gefüllt mit Glasfasern oder Kohlenstofffäden, hergestellt werden. Sie können zusammen mit der Haltevorrichtung 6 des Oszillators 2 gegossen werden.

In der gezeigten Variante ist das anpressende elastische Element 5 als Blattfeder ausgeführt.

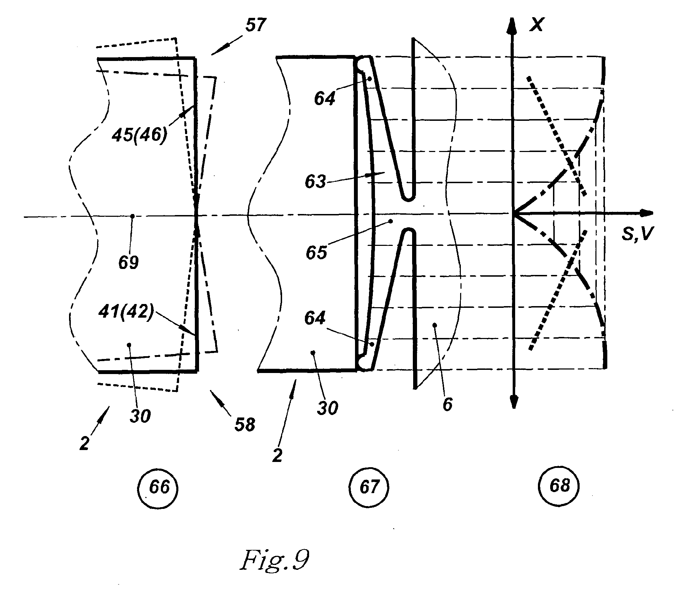

Ziffer 66 in Fig. 9 zeigt schematisch die Grafiken der zwei Deformationsphasen einer der Oberflächen 45 oder 46 der Stirnflächen 41 oder 42 der Platte 30 des Oszillators 2. Ziffer 67 der Fig. 9 zeigt einen der elastischen Träger 63, die in eine der Stirnflächen 41 oder 42 der Platte 30 des Oszillators 2 eingreift. Position 68 zeigt die Abhängigkeit der Querschnittsfläche S des elastischen Trägers 63 (punktierte Linie) und der Schwingungsgeschwindigkeit V dieses Querschnitts (Strich-Punktlinie) vom Abstand X dieses Querschnitts zur zentralen Linie 69, die durch die Plattenmitte 30 des Oszillators verläuft.

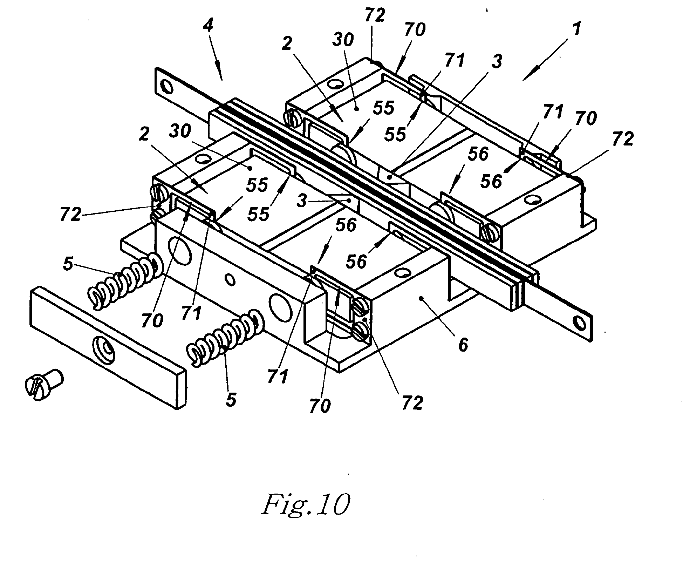

Fig. 10 zeigt eine zweite Befestigungsvariante der Oszillatoren 2 im Gehäuse 6. In dieser Variante sind die Oszillatoren 2 in vier elastischen Rahmenträgern 70 angeordnet. Jeder der Rahmenträger 70 ist parallel zu den Seitenflächen 39, 40 des Oszillators 2 angeordnet.

Eine Seite 71 jedes Trägerrahmens 70 ist auf der Seitenfläche 39 oder 40 des Oszillators 2 in seinem Minimum der Schwingungsgeschwindigkeit 55 oder 56 angeordnet. Eine zweite Seite 72 des Trägerrahmens ist auf der Haltevorrichtung 6 des Oszillators 2 befestigt. In dieser Variante sind elastische anpressende Elemente 5 als Zylinderfeder ausgeführt.

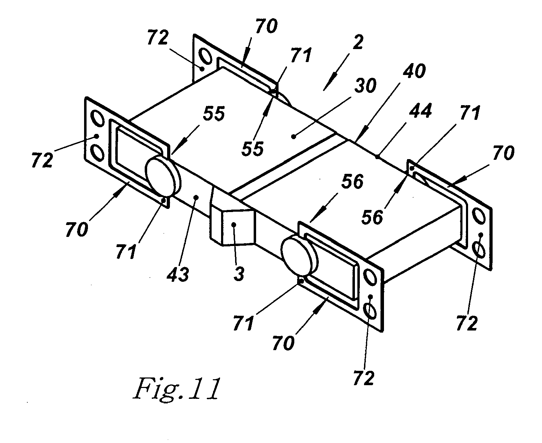

Fig. 11 zeigt den Oszillator 2 mit an ihm befestigten Trägerrahmen 70.

Die Trägerrahmen 70 sind aus dünnen Metallbändern oder aus dünnen Metallblechen durch Stanzen, Laserschneiden oder Erodieren hergestellt. Als Material für die Trägerrahmen 70 können wärmebehandelte Stähle, Berylliumbronze, Titan oder andere Aluminiumlegierungen verwendet werden. Die Dicke der Trägerrahmen wird etwa gleich 0,01 λ gewählt.

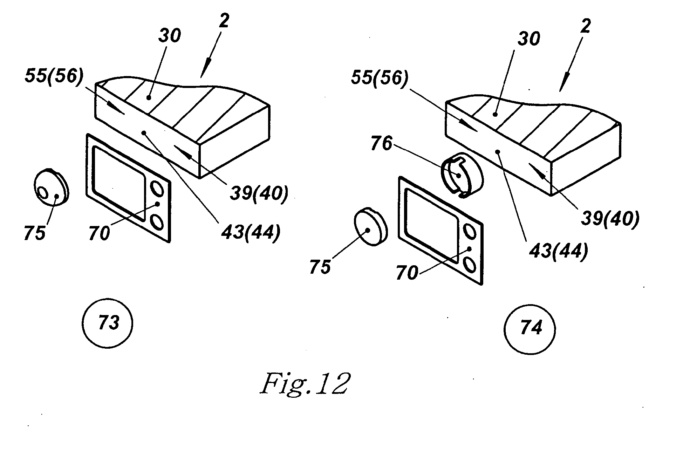

Ziffer 73 und 74 der Fig. 12 zeigen Varianten der Befestigung des Trägerrahmens 70 an der Platte 30 des Oszillators 2. Im ersten Fall ist eine Seite des Trägers 70 mittels des Klebetropfens 75 auf die Oberfläche 43 oder 44 geklebt. In der zweiten Variante erfolgt das Verkleben mittels der Übergangsschale 76.

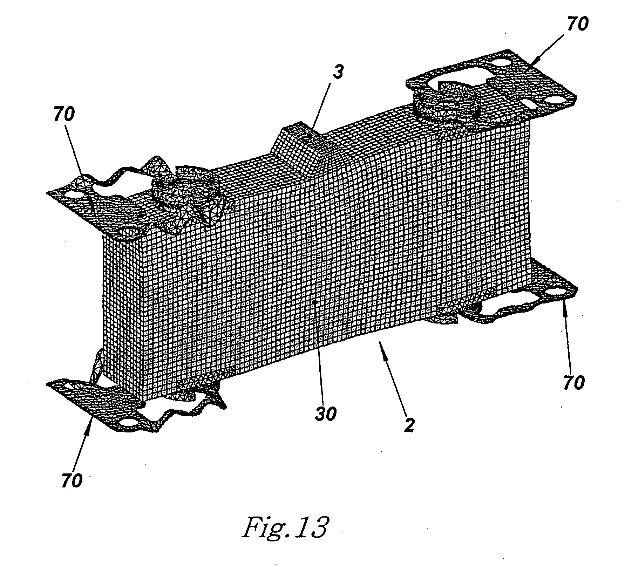

Fig. 13 zeigt die Deformation des Oszillators 2 mit auf ihm befestigter Trägerrahmen 70.

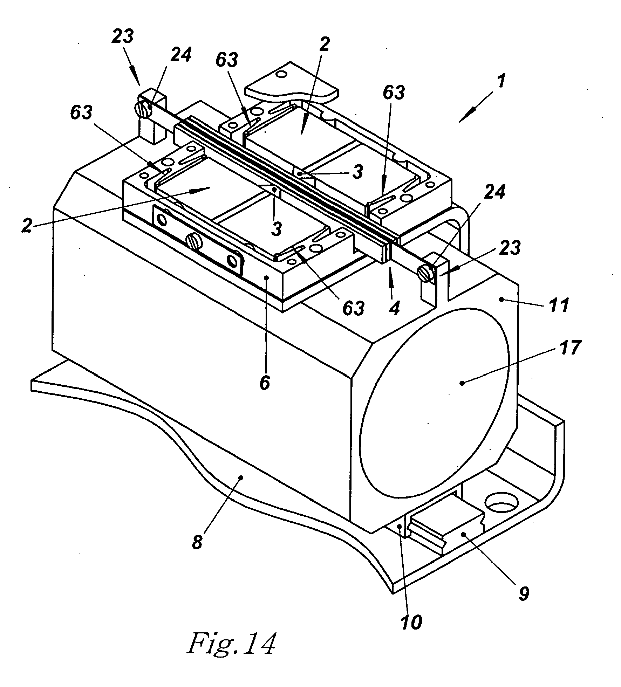

Fig. 14 zeigt den vorgeschlagenen Antrieb, bei dem die Haltevorrichtung 11 eine optische Linsengruppe 77 hält.

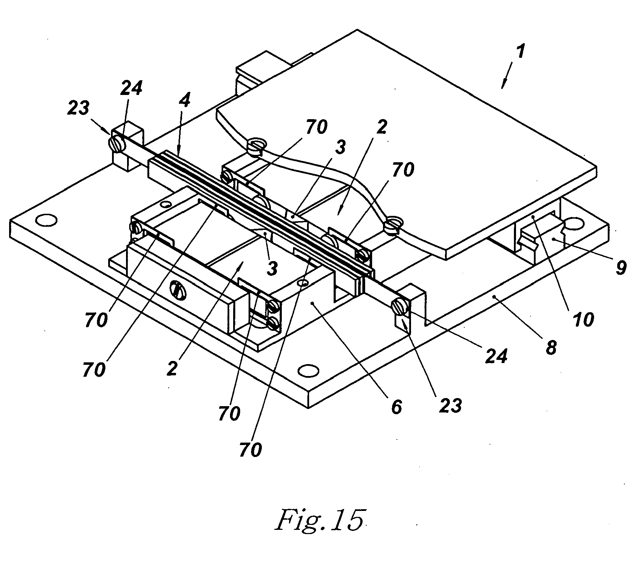

Fig. 15 zeigt eine Variante des vorgeschlagenen Antriebs, bei der die Friktionsschiene 4 mit seinen Befestigungspunkten 24 mit der Grundplatte 8 verbunden ist. In diesem Fall ist die Haltevorrichtung 6 des Oszillators 2 auf der beweglichen Haltevorrichtung 11 befestigt.

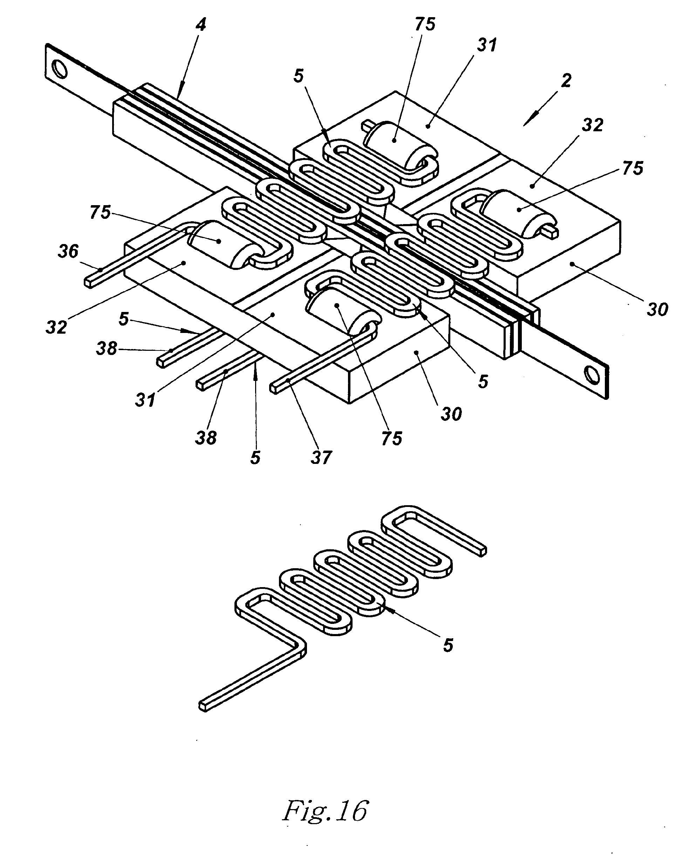

Fig. 16 zeigt eine weitere Befestigungsvariante des Oszillators 2. In dieser Variante sind die elastischen Elemente 5 als dünne Zugfedern ausgeführt, die mit Leim 75 aufgeklebt oder mittels eines Löttropfens 75 auf die Elektroden 31, 32, 34 des Oszillators 2 aufgelötet sind.

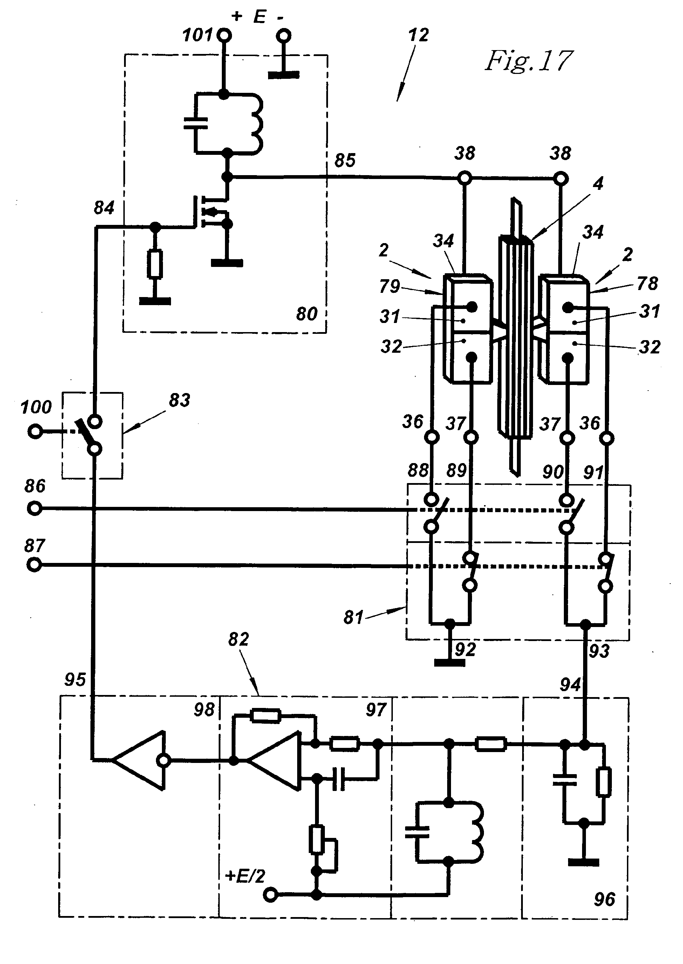

Fig. 17 zeigt die elektrische Schaltung einer Erregervorrichtung 12, ausgeführt als selbsterregender Generator mit der Erregerfrequenz ωo, die durch die mechanischen Parameter eines aktiven Ultraschalloszillators 78 vorgegeben wird, wobei ein zweiter passiver Ultraschalloszillator 79 mit der Erregervorrichtung 12 als passives Element verbunden ist.

Diese Vorrichtung besteht aus einem Leistungsverstärker 80, einem Richtungswahlschalter 81, einem Rückkopplungskreis 82 und einem Ausschalter 83. Der Leistungsverstärker 80 besitzt einen Steuereingang 84 und einen Verstärkerausgang 85. Der Richtungswahlschalter 81 weist Steuereingänge 86, 87, Umschalteingänge 88, 89, 90, 91 und Ausgänge 92, 93 auf. Der Rückkopplungskreis 82 hat einen Steuereingang 94 und einen Ausgang 95 und besteht aus einem Element 96 des Rückkopplungskreises, einem Filter 97, einem Phasenschieber 98 und einem Verstärker 99. Das Element des Rückkopplungskreises kann als Widerstand oder als Kondensator ausgeführt sein oder aus diesen beiden parallel geschalteten Elementen bestehen. Der Ausschalter 83 hat einen Steuereingang 100. Die Stromversorgung erfolgt von einer Energieversorgung mit der Spannung E, die mit einem Einspeisungseingang 101 verbunden ist.

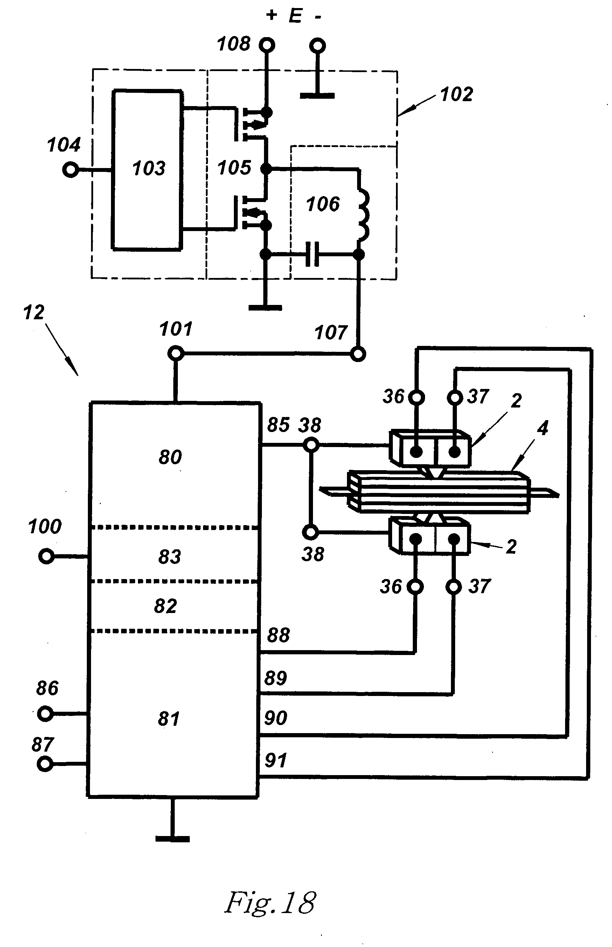

Fig. 18 zeigt die elektrische Schaltung der Erregervorrichtung 12, ausgeführt als selbsterregender Generator und zusätzlich ausgestattet mit einem geregelten PWM-Wandler 102 für Gleichspannung. Der PWM-Wandler 102 besteht aus einem geregelten PWM-Generator 103 mit Analogsteuereingang 104 und Leistungsverstärker 105 mit einem Filter 106, einem Ausgang 107 und einem Spannungsversorgungseingang 108.

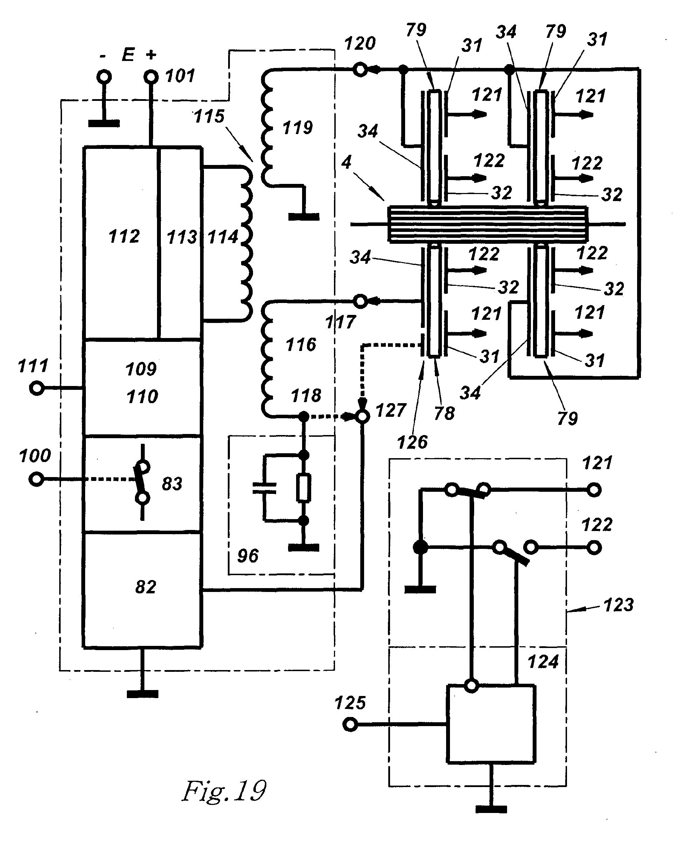

Fig. 19 zeigt die elektrische Schaltung der Erregervorrichtung 12, ausgeführt als selbsterregender Generator, einschließend einen symmetrischen PWM-Controller 109, oder als symmetrischer phasenschiebender Controller 110 mit Analogsteuereingang 111.

Der symmetrische PWM-Controller 109 oder der symmetrische phasenschiebende Controller 110 sind mit Eingängen 112 des Leistungsbrückenverstärkers verbunden, wobei ein Filter 113 und eine erste Wicklung 114 eines Transformators 115 ihre Last bilden.

Eine erste Sekundärwicklung 116 des Transformators 115 ist mit einem ihrer Ausgänge 117 mit der Sammelelektrode 34 des aktiven Oszillators 78 verbunden. Sein zweiter Ausgang 118 ist mit dem Element 96 des Rückkopplungskreises verbunden.

Eine zweite Sekundärwicklung 119 des Transformators 115 ist mit ihrem Ausgang 120 mit der Sammelelektrode 34 der passiven Oszillatoren 79 verbunden.

Die Erregerelektroden 31, 32 der Oszillatoren 78, 79 sind mit Umschalteingängen 121, 122 eines Richtungswahlschalters 123 verbunden, der aus einem Inverter 124 mit Umschalteingang 125 besteht.

In der vorgeschlagenen Erregervorrichtung 12 kann als Element im Rückkopplungskreis eine Zusatzelektrode 126 oder ein zusätzliches Piezoelement verwendet werden, das mit dem Eingang 127 des Rückkopplungskreises 82 - wie in Fig. 19 mit punktierter Linie dargestellt - verbunden ist.

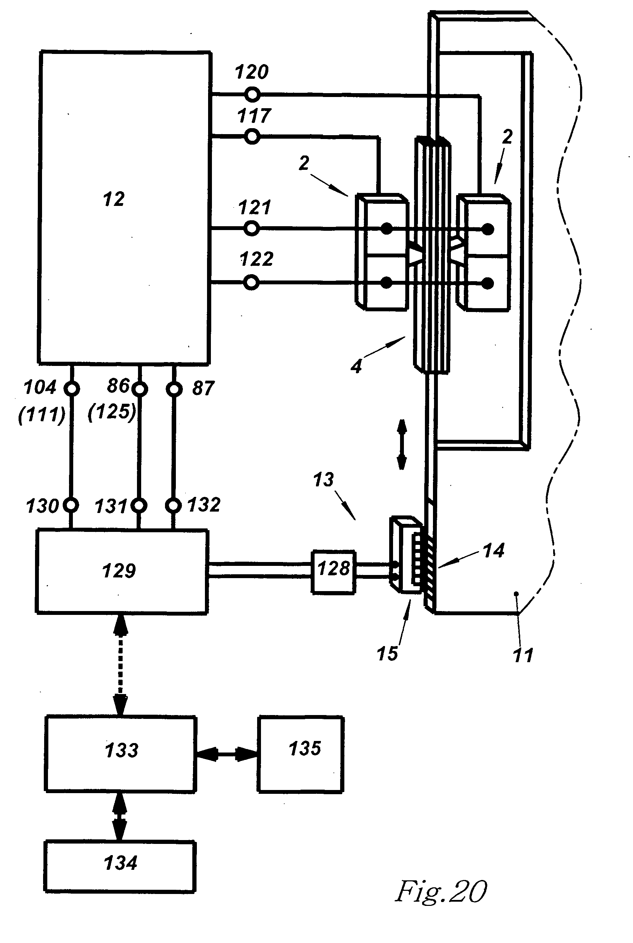

Fig. 20 zeigt die elektrische Schaltung des vorgeschlagenen Antriebs, der mit einem hochauflösenden Messsystem 13 mit dem Messlineal 14, dem optischen Lesekopf 15 und einem Interpolator 128 ausgestattet ist. Außerdem hat dieser Antrieb einen Prozessorregler 129 für Lage oder Geschwindigkeit der beweglichen Haltevorrichtung 11 mit Steuereingängen 130, 131, 132. Der Prozessregler 129 kann mit einem Steuercomputer 133, einer Tastatur 134 und einem Display 135 verbunden sein.

Die Funktionsweise des vorgeschlagenen hochpräzisen Ultraschallantriebs 1 (siehe Fig. 1) kann in folgender Weise erläutert werden:

Beim Anlegen einer von der Erregervorrichtung 12 erzeugten elektrischen Spannung (siehe Fig. 6), deren Frequenz gleich der Betriebsfrequenz wo des Ultraschalloszillators 2 ist, an eine der Erregerelektroden 31 (oder 32) und an die Sammelelektrode 34 wird im Oszillator 2 eine asymmetrische Ultraschallstehwelle erregt. Die Ziffern 47, 48 der Fig. 6 zeigen die Schwingungsform der Platte 30 des Oszillators 2 bei Erregung dieser Welle.

Bei asymmetrischen Schwingungen der Platte 30 bewegen sich die Punkte 54 der Oberfläche 43 der Seitenfläche 39 auf geneigten Bewegungsbahnen 53, dargestellt mit Ziffer 43, Fig. 6. Da sich die zentralen Teile der Oberfläche 43 der Seitenflächen 39 im Maximum der Schwingungsgeschwindigkeiten befinden, schwingt das auf der Platte 30 sich befindende Friktionselement 3 mit maximaler Amplitude. Das Friktionselement 3 bewegt sich auf einer geneigten Bahn, deren Richtung bei den Ziffern 59 und 60 der Fig. 7 mit dem Pfeil 61 angegeben ist.

Das Friktionselement 3 drückt bei Bewegung in Richtung der Friktionsschiene 4 (Position 59) auf die Friktionsschicht 19 (20, 26) mit der Kraft Fₒ. Diese Kraft ist unter dem Winkel α zur Friktionsschicht 19 (20, 26) geneigt und kann deshalb in eine Normalkraftkomponente Fₙ und eine Tangentialkomponente Fₜ zerlegt werden. Die Normalkraftkomponente Fₙ drückt das Friktionselement 3 an die Friktionsschicht 19 (20, 26), wodurch eine Verzahnung zwischen Friktionselement 3 und Friktionsschicht 19 (20, 26) erfolgt. Die Tangentialkomponente Fₜ überträgt auf die Friktionsschiene 4 eine Längs- oder Drehbewegung. Die Friktionsschiene 4 versetzt die bewegliche Haltevorrichtung 11 in Bewegung. Die genaue Bewegungsrichtung der Haltevorrichtung 11 wird durch den Schlitten 10, vorgegeben, der sich auf der auf der Grundplatte des Antriebs 1 befestigten Führungsschiene 9 bewegt.

Beim Anpressen (Komprimieren) des Friktionselementes 3 an die Friktionsschicht 19 (20, 26), wird diese Schicht - bezogen auf den ungespannten Zustand (freie Beweglichkeit) - etwas durchgebogen. Die Größe der Durchbiegung hängt sowohl von der Elastizität der Friktionsschichten 19 (20, 26) und der elastischen Schichten 22 (28) als auch von der Größe der Viskosität der viskosen Schichten 21(27) ab. In erster Näherung beträgt die Durchbiegung der Friktionsschicht 19 (20, 26) 1...4 Mikrometer.

Bei Bewegung des Friktionselementes 3 in Richtung der Friktionsschiene 4 (Ziffer 60) bildet sich zwischen dem Friktionselement 3 und der Schicht 19 (20, 26) ein Spalt. Das ist dadurch bedingt, dass zwischen der Friktionsschicht 19 (20, 26) und der elastischen Schicht 22 (28) sich eine viskose Schicht 21 befindet. Deshalb bewegt sich die Friktionsschicht 19 (20, 26) mit etwas Verzögerung in Richtung eines freien Zustands. Der Spalt ermöglicht es der Friktionsschiene 4, aufgrund der Trägheit in Richtung der mit Pfeil angegebenen Richtung sich zu bewegen.

Da die Schichten 19 (20, 26), 22 (28) und 17 (18, 25) eine wesentlich kleinere Dicke als die Wellenlänge λ aufweisen, wird in keiner der Schichten eine sich längs zur Dicke der Schicht ausbreitende Ultraschallwelle erregt.

Aufgrund der Verzögerung ist die Schwingungsamplitude der Friktionsschicht 19 (20, 26) um einiges kleiner als die Schwingungsamplitude des Friktionselements 3. Da die Friktionsschicht 4 aus einigen viskosen Schichten (21, 27) besteht, hat jede nachfolgende elastische Schicht 22 (28) eine wesentlich geringere Schwingungsamplitude als die vorherige Schicht. Deshalb treten schon bei 2...3 elastischen Schichten 22 (28) in der zentralen Schicht 17 (18, 25) keine Ultraschallwellen auf. Dies ermöglicht es, die Befestigungspunkte der Platte 18 (25) vollständig von Ultraschallschwingungen in diesen Stellen zu isolieren. Deshalb erzeugt die Friktionsschiene 4 in der beweglichen Haltevorrichtung 11 keine Ultraschallschwingungen.

Das Vorhandensein der abwechselnden viskosen Schichten 21 (27) und elastischen Schichten 22 (28) gestattet keine Ausbreitung einer Schubdeformation längs zur Friktionsschiene 4. Dies unterdrückt effektiv die Ultraschalllongitudinalwelle längs zur Friktionsschiene 4. Praktisch wird diese Welle bereits bei einer Entfernung von λ/2 zum Friktionselement 3 vollständig unterdrückt. Deshalb bildet sich in der Friktionsschicht 4 längs zu ihrer Länge keine Ultraschallstehwelle aus. Dies hat eine gleichmäßige Bewegung der Friktionsschicht 4, bezogen auf die das Friktionselement, über die gesamte Länge der Friktionsschiene 4 zur Folge.

Ein gewisser Effekt der Unterdrückung der Ultraschallwelle tritt auch dann auf, wenn die elastischen Schichten 22 als Teile 29 der Platten 20 der Friktionsschichten 19, wie in Fig. 4 gezeigt, ausgeführt sind.

In der in Fig. 1 gezeigten Variante des vorgeschlagenen hochpräzisen Ultraschallantriebs kann eine kleine Durchdringung der Ultraschallschwingungen vom Oszillator 2 an die bewegliche Haltevorrichtung 11 über die Wand 7 der Haltevorrichtung 6 des Oszillators 2 erfolgen. Deshalb sieht die vorgeschlagene Erfindung einige Varianten zur vollständigen akustischen Isolierung des Oszillators 2 vor.

In der ersten Variante wird jeder der Ultraschalloszillatoren 2 in gegenüberstehenden elastischen Trägern 63, wie in Fig. 8 und 9 gezeigt, montiert. Durch die Träger wird der Oszillator 2 sicher gehalten, da sie auf den Enden seiner Stirnflächen 41, 42 in den Oszillator 2 eingreifen.

Die Seiten 41 und 42 schwingen in der mit den Ziffern 47, 48, 51, 52 in Fig. 6 und mit der Ziffer 66 in Fig. 9 gezeigten Form. Die äußeren Teile 64 der elastischen Träger 63 greifen in die Stirnflächen 41, 42 in den Maxima 57, 58 der Schwingungsgeschwindigkeiten der Oberflächen 41, 42 ein. Deshalb schwingen die äußeren Teile 64 der Träger 63 mit maximaler Schwingungsgeschwindigkeit.

Der Isolationseffekt der gegenüberstehenden C-förmigen elastischen Träger 63 wird durch die Zeichnungen an den Ziffern 67, 68 der Fig. 9 erläutert.

Die elastischen Träger 63 sind so ausgeführt, dass die Querschnittsfläche S jedes der Träger 63 vom äußeren Teil 64 des Trägers hin zum zentralen Teil 65 des Trägers sich erhöht, wie dies durch die punktierte Linie mit Ziffer 68 in Fig. 9 dargestellt wird. Die Erhöhung der Querschnittsfläche S führt zu einer quadratischen Verringerung der Schwingungsgeschwindigkeit V (laufender Querschnitt) des Trägers 63. Außerdem verringert sich die Schwingungsgeschwindigkeit V des laufenden Querschnitts des Trägers 63 linear in Folge der Verringerung des Abstands vom laufenden Querschnitt des Trägers 63 zur durch die Mitte der Platte 30 verlaufenden Zentrallinie 69. Im Ergebnis dessen verringert sich die Schwingungsgeschwindigkeit des laufenden Querschnitts des Trägers 63 so, wie dies in Position 68, Fig. 9 dargestellt durch die Strich-Punktlinie.

Deshalb ist die Schwingungsgeschwindigkeit V des zentralen Teils 65 des Trägers 63 praktisch gleich Null. Das bedeutet, dass die Träger 63 keine Ultraschallschwingungen an die Haltevorrichtung 6 übertragen.

Zusätzlich unterbinden die Ultraschallschwingungen der äußeren Teile 64 des Trägers 63 die Reibung zwischen den Oberflächen 45, 46 der Stirnflächen 41, 42 des Oszillators 2 und der Träger 63. Dies erzeugt eine konstante Anpresskraft der Friktionselemente 3 an die Friktionsschiene 4.

Im zweiten Fall ist jeder der Oszillatoren 2 in zwei oder vier Rahmenträgern 70 montiert, wie dies in Fig. 10, 11, 12 dargestellt. Die erste Seite 71 jedes der Trägerrahmen 70 wird im Minimum der Schwingungsgeschwindigkeiten 55, 56 der Oberflächen 43, 44 montiert. Die Punkte 54 dieser Oberflächen schwingen in den Minima der Schwingungsgeschwindigkeiten 55 senkrecht zur Fläche des Trägers 70 (siehe Fig. 6, Ziffern 49, 50). Diese Schwingungen erzeugen im Träger 70 eine Biegewelle geringer Amplitude (siehe Fig. 13). Die zweite Seite 72 des Trägers 70 ist in der Haltevorrichtung 6 befestigt, die eine größere Querschnittsfläche als die Querschnittsfläche des Trägers 70 aufweist. Deshalb wird die Biegewelle von der Haltevorrichtung 6 reflektiert und dringt nicht in ihn ein. Dies bedeutet, dass der Trägerrahmen 70 den Oszillator 2 von der Haltevorrichtung 6 des Oszillators 2 isoliert.

Die Trägerrahmen 70 weisen in Längsrichtung eine hohe Festigkeit auf. Deshalb ermöglichen sie hohe Steifigkeit des Antriebs in Längsrichtung. Dadurch ist eine hohe Positioniergenauigkeit auch bei Bewegung schwerer beweglicher Teile als auch bei hohen Verfahrgeschwindigkeiten der beweglichen Haltevorrichtung möglich.

Die Ausführung der Träger 70 als Rahmen ermöglicht eine hohe Stabilität des Oszillators 2 in seiner Bewegungsrichtung. Dies erhöht auch die Positioniergenauigkeit.

In der in Fig. 14 gezeigten Variante des vorgeschlagenen Antriebs hält die bewegliche Haltevorrichtung 11 die optische Linsengruppe 77. Die Konstruktion des Antriebs ermöglicht es, die Haltevorrichtung 11 vollständig vor dem Eindringen von Ultraschallschwingungen in ihm zu isolieren.

In der in Fig. 15 dargestellten Variante des vorgeschlagenen Antriebs ist die Haltevorrichtung 6 der Oszillatoren 2 in der beweglichen Haltevorrichtung 11 befestigt. Diese Konstruktion des Antriebs ermöglicht es, die bewegliche Haltevorrichtung 11 vollständig vor dem Eindringen von Ultraschallschwingungen zu bewahren.

In der in Fig. 16 dargestellten Variante des Antriebs ist jedes der elastischen Elemente 5 (ausgeführt als Spiralfedern) in den Seitenflächen 39, 40 der Platte 30 des Oszillators 2 befestigt. Die elastischen Elemente 5 halten die zwei Oszillatoren 2 fest zusammen, indem die Friktionselemente 3 an die Friktionsschiene 4 gepresst werden. Da die elastischen Elemente 5 keinen Kontakt mit der Haltevorrichtung 6 des Oszillators 2 haben, ist es möglich, die bewegliche Haltevorrichtung 11 vor dem Eindringen von Ultraschallschwingungen zu bewahren.

In dem vorgeschlagenen hochpräzisen Ultraschallantrieb ist die synchrone Funktion der zwei gegenüber angeordneten Oszillatoren 2 sehr wichtig. Das bedeutet, dass die Friktionselemente 3 des Oszillators 2 sich synchron einander nähern und voneinander sich weg bewegen müssen. Nur in diesem Fall entwickelt der Antrieb seine maximale Geschwindigkeit und die maximale Zugkraft. Dabei muss die Frequenz der Erregerspannung der Arbeitsfrequenz ωo des Oszillators 2 entsprechen.

Fig. 17 zeigt die elektrische Schaltung der Erregervorrichtung 12, durch die die synchrone Arbeit der zwei oder mehreren gegen über angeordneten Oszillatoren 2 sichergestellt. Die Erregervorrichtung 12 stellt einen selbsterregenden Generator dar, dessen Frequenz durch die mechanischen. Parameter des aktiven Ultraschalloszillators 78 (2) vorgegeben ist.

Diese Erregervorrichtung funktioniert folgendermaßen:

Bei eingeschalteten Schalter 83 wird der Transistor des Leistungsverstärkers 80 geöffnet. Die Elektrode 34 des Oszillators 78 ist dabei mit der Elektrode 31 (oder 32) verbunden. Im Ergebnis dessen fließt durch das Element 96 des Rückkopplungskreises ein Impuls des Entladestroms der statischen Kapazität des Oszillators 2. Am Eingang 94 des Elementes des Rückkopplungskreises bildet sich ein Impuls in der Rückkopplung aus. Dieser Impuls durchläuft die Rückkopplung 82, wird invertiert und gelangt vom Ausgang 95 über den Ausschalter 83 an den Eingang 84 des Verstärkers 80. Der Transistor des Leistungsverstärkers 80 schließt. Dies führt zum Aufladen der statischen Kapazität des Oszillators 2. Am Element 96 des Rückkopplungskreises bildet sich ein zweiter Spannungsimpuls aus, der den Rückkopplungskreis durchlaufend den Transistor des Leistungsverstärkers 80 schließt. Im Ergebnis setzt ein Schwingungsprozess ein, dessen Schwingungsfrequenz durch die Phasenverschiebung im gesamten geschlossenen Rückkopplungskreis bestimmt wird.

Die Schaltung wird so ausbalanciert, dass die Arbeitsfrequenz wo der gesamten Phasenverschiebung Null Grad beträgt. Dies wird durch die Einstellung der entsprechenden Phasenverschiebung des Phasenschiebers 98 erreicht. Bei einer Phasenverschiebung gleich null wird die Erregerfrequenz durch die mechanischen Parameter des Oszillators 78 bestimmt.

Da der Strom des Oszillators 79 nicht durch das Element 96 des Rückkopplungskreises fließt, ist der Oszillator passiv und hat keinen Einfluss auf die Frequenz der Erregervorrichtung. Da im vorgeschlagenen Antrieb gleichartige Oszillatoren mit gleichen Abmessungen verwendet werden, stellt die Erregerfrequenz ωo zugleich die Arbeitsfrequenz auch für den Oszillator 79 dar. Deshalb schwingen die Friktionselemente der Oszillatoren 78 und 79 synchron zueinander.

Das Anlegen von Spannungsimpulsen an den Steuereingang 100 des Ausschalters 83 ermöglicht die impulsgesteuerte Bewegung des Antriebs 1. Das Anlegen von Spannungsimpulsen an die Eingänge 76, 87 des Richtungswahlschalters 81 ermöglicht die impulsgesteuerte Änderung der Bewegungsrichtung des Antriebs 1. Zur Analogsteuerung der Bewegung des Antriebs 1 kann die Erregervorrichtung 12 einen PWM-Wandler 102 für Gleichspannung aufweisen, wie in Fig. 18 dargestellt. In diesem Fall funktioniert der Antrieb folgendermaßen:

Beim Anlegen eines analogen Steuersignals an den Analogsteuereingang 104 ändert sich die Breite der PWM-Impulse, die durch den PWM-Generator 103 bereitgestellt werden. Diese Impulse gelangen auf den Eingang des Leistungsverstärkers 105, werden verstärkt und durch das Filter 106 geglättet. Im Ergebnis dessen bildet sich am Ausgang 107 eine analoge sich ändernde Spannung aus, die an den Einspeisungseingang 101 des Leistungsverstärkers 80 der Erregervorrichtung 12 gelangt.

Die Spannungsänderung am Einspeisungseingang 101 führt zu einer proportionalen Änderung des Erregerniveaus der Ultraschalloszillatoren 2 und folglich zur proportionalen Änderung der Bewegungsgeschwindigkeit der Friktionsschiene 4 und der beweglichen Haltevorrichtung 11.

Dies ermöglicht eine Analogsteuerung der Bewegung des Antriebs 1. Nachteilig für diese Art der Steuerung ist die durch das Filter 106 bewirkte Signalverzögerung.

Die Fig. 19 zeigt die elektrische Schaltung einer weiteren Erregervorrichtung 12. Diese Variante der Erregervorrichtung arbeitet folgendermaßen:

Der symmetrische PWM-Controller 109 stellt zwei PWM-Signale bereit, deren Winkellage konstant, bezogen auf die Impulse der Rückkopplung bleibt. Diese zwei PWM-Signale gelangen auf die Eingänge des Leistungsbrückenverstärkers 112 und steuern die Funktion dieses Verstärkers.

Der symmetrisch phasenschiebende Controller 110 stellt zwei symmetrische phasenschiebende Rechtecksignale bereit, deren Symmetrie der Phasenverschiebung konstant, bezogen auf die Impulse der Rückkopplung bleibt. Diese beiden Signale gelangen auf die Eingänge des Leistungsverstärkers 112 und steuern die Funktion dieses Verstärkers.

In diesem wie auch in dem anderen Fall bildet sich in der Diagonale des Brückenverstärkers 112 ein bipolares PWM-Signal. Dieses Signal wird über das Filter 113 auf den Transformator 115 gegeben. An den Sekundärwicklungen 116 (Ausgänge 117, 118) und 119 (Ausgang 120) des Transformators 115 bildet sich eine sinusförmige Spannung aus. Die Phasenverschiebung dieser Spannung bleibt, bezogen auf das Signal der Rückkopplung bei Änderung der Steuersignalspannung am analogen Eingang 111, konstant. Es ändert sich nur die Amplitude dieser Spannung.

Das Prinzip der Selbsterregung, der Erregervorrichtung 12 durch den symmetrischen PWM-Controller und den symmetrischen phasenschiebenden Controller 110 ist das gleiche, wie das in der in Fig. 17 dargestellten Erregervorrichtung 12.

Im Unterschied zu der in der Fig. 18 dargestellten Erregervorrichtung erzeugen der PWM-Controller 109 und der symmetrisch phasenschiebende Controller 110 keine Verzögerung im Steuersignal. Dies ermöglicht es, auf analoge Weise ohne Verzögerung, den Antrieb 1 zu steuern.

In jeder der Varianten der Erregervorrichtung kann als Element der Rückkopplung eine Zusatzelektrode oder ein zusätzliches auf dem Oszillator 2 angeordnetes Piezoelement 126 verwendet werden, so wie dies Fig. 19 dargestellt ist.

Die Verwendung des Invertors 124 im Richtungswahlschalter 123 (Fig. 19) ermöglicht es, mit Hilfe eines Umschalteingangs 125 die Bewegungsrichtung des Antriebs 1 umzuschalten.

Der vorgeschlagene Antrieb kann mit einem hochauflösenden Messsystem 13 und einem Prozessorregler 129 für Lage und Geschwindigkeit der beweglichen Haltevorrichtung 11 (Fig. 20) ausgestattet sein.

Ein solcher Antrieb arbeitet folgendermaßen:

Bei Bewegung der beweglichen Haltevorrichtung 11 werden mittels des Lesekopfs 15 mit dem Interpolator 128 und dem Messlineal 14 des Messsystems 13 die Koordinaten der Haltevorrichtung 11 bestimmt. Die Koordinaten werte gelangen auf den Prozessorregler 129, der mit seinen Ausgängen 130, 131, 132 das Steuersignal für die Geschwindigkeit der Bewegung und das Signal oder die Signale zur Umschalten der Bewegungsrichtung bereitstellt. Diese Signale gelangen auf die Eingänge 104 (11), 86 (125), 87 der Erregervorrichtung 12 und steuern die Bewegung oder den Halt der beweglichen Haltevorrichtung 11. Der Computer 133 mit der Tastatur 134 und dem Display 135 dient zur Vorgabe der Position oder der Bewegungsparameter der beweglichen Haltevorrichtung 11 und der Vorgabe der Regelparameter für den Prozessorregler 129.

Moderne optische Messsysteme ermöglichen die Messung der Position der beweglichen Haltevorrichtung 11 mit einer Genauigkeit von +/- 2 Nanometern. Das Fehlen von Ultraschallschwingungen in der beweglichen Haltevorrichtung 11 und der Grundplatte 8 des vorgeschlagenen Antriebs ermöglicht es, mit der gleichen Genauigkeit die bewegliche Haltevorrichtung 11 zu positionieren. Ein solcher Antrieb gewährleistet eine hohe Laufruhe (Gleichmäßigkeit) der beweglichen Haltevorrichtung 11 auch bei geringen Bewegungsgeschwindigkeiten, so dass bei einer Geschwindigkeit von 1 Mikrometer/Sekunde der Antrieb eine Gleichmäßigkeit der Geschwindigkeit von besser als 1% ermöglicht.

Der vorgeschlagene Antrieb ermöglicht es, die optischen Systeme genau zu fokussieren, so das es möglich ist, die Genauigkeit der Fokussierung während der Zeit der Bewegung der beweglichen Haltevorrichtung 11 verfolgen zu können.

Da außerdem in der Führungsschiene die Ultraschallschwingungen fehlen, führt dies zur Erhöhung der Lebensdauer des Antriebs und unterbindet die Entstehung von Geräuschen in ihm.

### Bezugszeichenliste

- 1: Antrieb
- 2: Ultraschalloszillator
- 3: Friktionselement des Oszillators 2
- 4: Friktionsschiene
- 5: Elastische Elemente
- 6: Haltevorrichtung für den Oszillator 2
- 7: Wände des Halters 6
- 8: Grundplattes des Antriebs 1
- 9: Führungsschiene
- 10: Schlitten
- 11: Bewegliche Haltevorrichtung
- 12: Erregervorrichtung des Oszillators 2
- 13: Hochauflösendes Messsystem
- 14: Messlineal des Messsystems 13
- 15: Lesekopf des Messsystems 13
- 16: Wechselschichten der Friktionsschiene 4
- 17: Zentralschicht der Friktionsschiene 4
- 18: Dünne elastische Platte der Zentralschicht 17
- 19: Äußere Friktionsschichten
- 20: Platten der Friktionsschichten 19
- 21: Viskose Schichten
- 22: Elastische Schichten
- 23: Gegenüberliegende Seiten der Platte 18
- 24: Befestigungspunkte der Platte 18
- 25: Dünne elastische Scheibe der Zentralschicht 17
- 26: Ring der Friktionsschicht 19
- 27: Ring der viskosen Schicht 21
- 28: Ring der elastischen Schicht 22
- 29: Teile der Platte 20 der Friktionsschichten 19
- 30: Piezoelektrische Platte des Oszillators 2
- 31, 32: Erregerelektroden des Oszillators 2
- 33: Erste große Seite der Platte 30
- 34: Sammelelektrode des Oszillators 2
- 35: Zweite große Seite der Platte 30
- 36, 37, 38: Ausgänge der Elektroden 31, 32, 34
- 39: Erste Seitenfläche der Platte 30
- 40: Zweite Seitenfläche der Platte 30
- 41, 42: Stirnflächen der Platte 30
- 43, 44, 45, 46: Oberflächen der Seiten- bzw. Stirnflächen 39, 40, 41, 42
- 47, 48: Grafik der Deformation der Platte 30
- 49, 50, 51, 52: Bewegungsbahnen 53 der Punkte 54
- 53: Bewegungsbahnen der Punkte 54
- 54: Punkte der Oberflächen 43, 44, 45, 46
- 55, 56: Minima der Schwingungsgeschwindigkeiten der Oberflächen 43, 44
- 57, 58: Maxima der Schwingungsgeschwindigkeiten der Oberflächen 45, 46
- 59, 60: Grafik der Deformation der Friktionsschiene 4
- 61: Pfeil der Bewegungsrichtung der Punkte 54
- 62: Pfeil der Bewegungsrichtung der Schiene 4
- 63: Gegenüberstehende elastische Träger
- 64: Äußere Trägerteile
- 65: Zentrale Trägerteile
- 66: Grafik der Deformationsphasen der Oberflächen 45, 46
- 67: Zeichnung des Trägers 63
- 68: Grafiken
- 69: Zentrallinie der Platte 30
- 70: Elastischer Trägerrahmen
- 71: Erste Seite des Trägers 70
- 72: Zweite Seite des Trägers 70
- 73, 74: Positionen möglicher Verbindungen des Trägerrahmens 70 mit dem Oszillator 2
- 75: Leim- oder Löttropfen
- 76: Übergangsschale
- 77: optische Linsengruppe
- 78: Aktiver Oszillator
- 79: Passiver Oszillator
- 80: Leistungsverstärker
- 81: Richtungswahlschalter
- 82: Rückkopplungskreis
- 83: Ausschalter
- 84: Steuereingang des Verstärkers 80
- 85: Ausgang des Verstärkers 80
- 86, 87: Steuereingänge des Umschalters 81
- 88, 89, 90, 91: Umschalteingänge
- 92, 93: Ausgänge des Umschalters 81
- 94: Steuereingang des Rückkopplungskreises 82
- 95: Ausgang des Rückkopplungskreises 82
- 96: Element des Rückkopplungskreises
- 97: Filter des Rückkopplungskreises 82
- 98: Phasenschieber des Rückkopplungskreises 82
- 99: Verstärker für den Rückkopplungskreis 82
- 100: Steuereingang des Ausschalters 83
- 101: Einspeisungseingang des Leistungsverstärkers 80, 112
- 102: Geregelter PWM-Wandler für Gleichspannung
- 103: Geregelter PWM-Generator
- 104: Analogsteuereingang des PWM-Generators 103
- 105: Leistungsverstärker des PWM-Wandlers 102
- 106: Filter des Leistungsverstärkers 105
- 107: Ausgang des Leistungsverstärkers 105
- 108: Einspeisungseingang
- 109: Symmetrischer PWM-Controller
- 110: Symmetrisch phasenschiebender Controller
- 111: Analogsteuereingang des symmetrischen PWM-Controllers 109 oder des symmetrisch phasenschiebenden Controllers 110
- 112: Leistungsbrückenverstärker
- 113: Filter
- 114: Erste Wicklung des Transformators 115
- 115: Transformator
- 116: Erste Sekundärwicklung des Transformators 115
- 117, 118: Ausgänge der Wicklung 116
- 119: Zweite Sekundärwicklung des Transformators 115
- 120: Erster Ausgang der zweiten Sekundärwicklung 119
- 121, 122: Umschalteingänge des Richtungswahlschalters 123
- 123: Richtungswahlschalter
- 124: Inverter des Richtungswahlschalters 123
- 125: Umschalteingang des Umschalters 124
- 126: Zusatzelektrode oder zusätzliches Piezoelement
- 127: Steuereingang des Rückkopplungskreises 82
- 128: Interpolator des Messsystems 13
- 129: Prozessorregler für Lage oder Geschwindigkeit der bewegli- chen Haltervorrichtung 11
- 130, 131, 132: Steuerausgänge des Prozessorreglers 129
- 133: Steuercomputer
- 134: Tastatur des Computers 133
- 135: Display des Computers 133

## Patentansprüche

1. Ultraschallantrieb (1) mit mindestens zwei einander gegenüber angeordneten Ultraschalloszillatoren (2), welche piezoelektrische Platten mit auf ihnen angeordneten Friktionselementen (3) aufweisen, einer Friktionsschiene (4) mit zwei Friktionsschichten auf ihr, einer beweglichen Haltevorrichtung (6), einer Grundplatte (8) für den Antrieb und einer Erregervorrichtung (12) der Ultraschalloszillatoren,
**dadurch gekennzeichnet, dass**
die Friktionsschiene als Mehrschichtstab oder als Mehrschichtring jeweils mit einer ungeraden Anzahl von parallel zu den Friktionselemente aufweisenden Seitenflächen (39) der piezoelektrischen Platten angeordneten Schichten (16) ausgeführt ist, wobei eine Zentralschicht (17) eine Träger-Platte oder -Scheibe und zwei äußere Schichten (19), die Friktionsschichten bilden, aufweist, wobei zwischen der Zentralschicht und den äußeren Schichten viskose Schichten (21) und elastische Schichten (22) angeordnet sind und die Träger-Platte oder - Scheibe Befestigungspunkte (24) aufweist, mit denen die Friktionsschiene an der beweglichen Haltevorrichtung oder der Grundplatte angebracht ist.

2. Ultraschallantrieb nach Anspruch 1,
**dadurch gekennzeichnet, dass**
die Zentralschicht (17) eine gegenüber den beiden anderen Dimensionen geringe Dicke und/oder eine vorbestimmte Elastizität, insbesondere Biegeelastizität, aufweist.

3. Ultraschallantrieb nach Anspruch 1 und 2,
**dadurch gekennzeichnet, dass**
zwischen der Zentralschicht (17) und den zwei äußeren Schichten (19) alternierend jeweils mehrere viskose Schichten (21) und elastische Schichten (22) angeordnet sind.

4. Ultraschallantrieb nach einem der vorangehenden Ansprüche,
**dadurch gekennzeichnet, dass**
mindestens eine der elastischen Schichten (22) als Teil einer Friktionsschicht ausgeführt ist.

5. Ultraschallantrieb nach einem der vorangehenden Ansprüche,
**dadurch gekennzeichnet, dass**
die Zentralschicht (17) aus Stahl oder Berylliumbronze oder Kunststoff besteht.

6. Ultraschallantrieb nach einem der vorangehenden Ansprüche,
**dadurch gekennzeichnet, dass**
die Friktionsschichten aus Oxidkeramik, Metallkeramik oder Stahl bestehen.

7. Ultraschallantrieb nach einem der vorangehenden Ansprüche,
**dadurch gekennzeichnet, dass**
die viskosen Schichten (21) aus einem, insbesondere klebenden, Gummi, Polymermaterial oder Papier bestehen.

8. Ultraschallantrieb nach einem der vorangehenden Ansprüche,
**dadurch gekennzeichnet, dass**
die elastischen Schichten (22) aus Stahl, Titan, Kupfer, Aluminium oder Oxidkeramik bestehen.

9. Ultraschallantrieb nach einem der vorangehenden Ansprüche,
**dadurch gekennzeichnet, dass**
jeder der Ultraschalloszillatoren (2) in gegenüberstehenden elastischen Trägern (63) angeordnet ist, die äußeren Teile der elastischen Träger den jeweiligen Ultraschalloszillator an seinen gegenüberliegenden Stirnflächen in seinen Maxima der Schwingungsgeschwindigkeiten halten und zentrale Teile der elastischen Träger mit der Haltevorrichtung (6) des Oszillators verbunden sind.

10. Ultraschallantrieb nach Anspruch 9,
**dadurch gekennzeichnet, dass**
die elastischen Träger (63) so ausgeführt sind, dass sich die Querschnittsfläche (S) jedes Trägers vom äußeren zum inneren Bereich des Trägers erhöht.

11. Ultraschallantrieb nach einem der vorangehenden Ansprüche,
**dadurch gekennzeichnet, dass**
jeder der Ultraschalloszillatoren (2) in zwei oder vier elastischen Trägerrahmen (70) befestigt ist, die parallel zu Seitenflächen des jeweiligen Ultraschalloszillators angeordnet sind, wobei jeder der Trägerrahmen an der jeweiligen Seitenfläche im Minimum der Schwingungsgeschwindigkeit des Ultraschalloszillators gehalten und mit der Haltevorrichtung des Oszillators verbunden ist.

12. Ultraschallantrieb nach einem der vorangehenden Ansprüche,
**dadurch gekennzeichnet, dass**
die Erregervorrichtung (12) der Ultraschalloszillatoren (2) als selbsterregender Generator ausgeführt ist, dessen Erregerfrequenz durch die mechanischen Parameter eines der aktiven Ultraschalloszillatoren vorgegeben ist, wobei die anderen Ultraschalloszillatoren mit der Erregervorrichtung als passive Elemente verbunden sind.

13. Ultraschallantrieb nach Anspruch 12,
**dadurch gekennzeichnet, dass**
die Erregervorrichtung (12) mit einem geregelten PWM-Wandler (102) für Gleichspannung ausgestattet ist.

14. Ultraschallantrieb nach Anspruch 12 oder 13,
**dadurch gekennzeichnet, dass**
der selbsterregende Generator einen symmetrischen PWM-Controller (109) oder einen symmetrisch phasenschiebenden Controller (110) aufweist.

15. Ultraschallantrieb nach einem der vorangehenden Ansprüche,
**dadurch gekennzeichnet, dass**
er mit einem hochauflösenden Messsystem (13) und einer Regeleinrichtung (129) für Lage und/oder Geschwindigkeit der beweglichen Haltevorrichtung ausgestattet ist.

## Claims

1. Ultrasound drive (1) comprising at least two oppositely arranged ultrasonic oscillators (2) which have piezoelectric plates with friction elements (3) arranged on them, a friction rail (4) with two friction layers on it, a movable holder (6), a base plate (8) for the drive and an excitation device (12) of the ultrasonic oscillators,
**characterized in that**
the friction rail is realized in the form of a multilayer bar or multilayer ring with an uneven number of layers (16) arranged parallel to the side surfaces (39), which comprise friction elements, of the piezoelectric plates, wherein a central layer (17) comprises a carrier plate or carrier disc and two outer layers (19) which form friction layers, wherein viscous layers (21) and elastic layers (22) are arranged between the central layer and the outer layers, and the carrier plate or carrier disc has fixing points (24) by means of which the friction rail is fixed to the movable holder or the base plate.

2. Ultrasound drive according to claim 1,
**characterized in that**
the central layer (17) has, as compared to the two other dimensions, a smaller thickness and/or a predetermined elasticity, especially bending elasticity.

3. Ultrasound drive according to claim 1 and 2,
**characterized in that**
several viscous layers (21) and elastic layers (22) are arranged alternately between the central layer (17) and the two outer layers (19).

4. Ultrasound drive according to one of the preceding claims,
**characterized in that**
at least one of the elastic layers (22) is formed as part of a friction layer.

5. Ultrasound drive according to one of the preceding claims,
**characterized in that**
the central layer (17) is made of steel or beryllium bronze or plastic.

6. Ultrasound drive according to one of the preceding claims,
**characterized in that**
the friction layers are made of oxide ceramics, metal ceramics or steel.

7. Ultrasound drive according to one of the preceding claims,
**characterized in that**
the viscous layers (21) are made of a rubber, especially an adhesive one, a polymer material or paper.

8. Ultrasound drive according to one of the preceding claims,
**characterized in that**
the elastic layers (22) are made of steel, titanium, aluminum or oxide ceramics.

9. Ultrasound drive according to one of the preceding claims,
**characterized in that**
each of the ultrasonic oscillators (2) is arranged in opposite elastic carriers (63), the outer parts of the elastic carriers maintain the respective ultrasonic oscillator in its maximums of the oscillating speeds on its opposite front faces, and central parts of the elastic carriers are connected to the holder (6) of the oscillator.

10. Ultrasound drive according to claim 9,
**characterized in that**
the elastic carriers (63) are realized such that the cross-sectional surface (S) of each carrier increases from the outer to the inner area of the carrier.

11. Ultrasound drive according to one of the preceding claims,
**characterized in that**
each of the ultrasonic oscillators (2) is fixed in two or four elastic carrier frames (70) which are arranged parallel to side surfaces of the respective ultrasonic oscillator, wherein each of the carrier frames is maintained in the minimum of the oscillating speed of the ultrasonic oscillator on the respective side surface and is connected to the holder of the oscillator.

12. Ultrasound drive according to one of the preceding claims,
**characterized in that**
the excitation device (12) of the ultrasonic oscillators (2) is configured as a self-exciting generator whose excitation frequency is predetermined by the mechanical parameters of one of the active ultrasonic oscillators, wherein the other ultrasonic oscillators are connected to the excitation device as passive elements.

13. Ultrasound drive according to claim 12,
**characterized in that**
the excitation device (12) is provided with a controlled PWM converter (102) for direct voltage.

14. Ultrasound drive according to claim 12 or 13,
**characterized in that**
the self-exciting generator comprises a symmetric PWM controller (109) or a symmetrically phase-shifting controller (110).

15. Ultrasound drive according to one of the preceding claims,
**characterized in that**
the ultrasound drive is provided with a high-resolution measuring system (13) and a controlling device (129) for position and/or speed of the movable holder.

## Revendications

1. Entraînement à ultrasons (1) comprenant au moins deux oscillateurs à ultrasons (2) agencés à l'opposé l'un de l'autre, qui comprennent des plaques piézo-électriques avec des éléments de friction (3) agencés sur celles-ci, un rail à friction (4) avec deux couches de friction sur lui-même, un dispositif de maintien mobile (6), et une plaque de base (8) pour l'entraînement et un dispositif excitateur (12) des oscillateurs à ultrasons,
**caractérisé en ce que**
le rail à friction est réalisé sous la forme d'un barreau multicouche ou d'une bague multicouche présentant respectivement un nombre impair de couches (16) présentant les éléments de friction et agencées parallèlement aux surfaces latérales (39) des plaques piézo-électriques, dans lequel une couche centrale (17) comprend une plaque ou un disque porteur et deux couches extérieures (19), qui forment des couches de friction, et entre la couche centrale et les couches extérieures sont agencées des couches visqueuses (21) et des couches élastiques (22), et la plaque ou le disque porteur comporte des points de fixation (24) au moyen desquels le rail à friction est agencé sur le dispositif de maintien mobile ou sur la plaque de base.

2. Entraînement à ultrasons selon la revendication 1,
**caractérisé en ce que** la couche centrale (17) présente une épaisseur plus faible par rapport aux deux autres dimensions et/ou présente une élasticité prédéterminée, en particulier une élasticité en flexion prédéterminée.

3. Entraînement à ultrasons selon la revendication 1 et 2,
**caractérisé en ce que** plusieurs couches visqueuses (21) et plusieurs couches élastiques (22) sont agencées respectivement en alternance entre la couche centrale (17) et les deux couches extérieures (19).

4. Entraînement à ultrasons selon l'une des revendications précédentes,
**caractérisé en ce que** l'une au moins des couches élastiques (22) est réalisée en tant que partie d'une couche de friction.

5. Entraînement à ultrasons selon l'une des revendications précédentes,
**caractérisé en ce que** la couche centrale (17) est en acier ou en bronze au béryllium ou en matière plastique.

6. Entraînement à ultrasons selon l'une des revendications précédentes,
**caractérisé en ce que** les couches de friction sont en céramique à base d'oxyde, en céramique à base de métal ou en acier.

7. Entraînement à ultrasons selon l'une des revendications précédentes,
**caractérisé en ce que** les couches visqueuses (21) sont en caoutchouc, en matériau polymère ou en papier, en particulier à effet collant.

8. Entraînement à ultrasons selon l'une des revendications précédentes,
**caractérisé en ce que** les couches élastiques (22) sont en acier, en titane, en cuivre, en aluminium ou en céramique à base d'oxyde.

9. Entraînement à ultrasons selon l'une des revendications précédentes,
**caractérisé en ce que** chacun des oscillateurs à ultrasons (2) est agencé dans des supports élastiques opposés (63), les parties extérieures du support élastique tiennent l'oscillateur à ultrasons respectifs au niveau de ses faces frontales opposées à ses maxima des vitesses d'oscillation, et des parties centrales du support élastique sont reliées au dispositif de maintien (6) de l'oscillateur.

10. Entraînement à ultrasons selon la revendication 9,
**caractérisé en ce que** les supports élastiques (63) sont réalisés de telle façon que la surface de section transversale (S) de chaque support augmente de la région extérieure vers la région intérieure du support.

11. Entraînement à ultrasons selon l'une des revendications précédentes,
**caractérisé en ce que** chacun des oscillateurs à ultrasons (2) est fixé dans deux ou quatre cadres porteurs élastiques (70), qui sont agencés parallèlement aux faces latérales de l'oscillateur à ultrasons respectif, et chacun des cadres porteurs est tenu sur la face latérale respective au minimum de la vitesse d'oscillation de l'oscillateur à ultrasons et est relié au dispositif de maintien de l'oscillateur.

12. Entraînement à ultrasons selon l'une des revendications précédentes,
**caractérisé en ce que** le dispositif excitateur (12) des oscillateurs à ultrasons (2) est réalisé comme un générateur à auto-excitation, dont la fréquence d'excitation est imposée par les paramètres mécaniques de l'un des oscillateurs à ultrasons actifs, et les autres oscillateurs à ultrasons sont reliés au dispositif excitateur comme des éléments passifs.

13. Entraînement à ultrasons selon la revendication 12,
**caractérisé en ce que** le dispositif excitateur (12) est équipé d'un convertisseur à modulation de largeur d'impulsion (102) régulé pour une tension continue.

14. Entraînement à ultrasons selon la revendication 12 ou 13,
**caractérisé en ce que** le générateur à auto-excitation comprend un contrôleur symétrique à modulation de largeur d'impulsion (109) ou un contrôleur symétrique (110) à décalage de phase.

15. Entraînement à ultrasons selon l'une des revendications précédentes, **caractérisé en ce qu'**il est équipé d'un système de mesure (13) à haute résolution et d'un moyen de régulation (129) pour la position et/ou pour la vitesse du dispositif de maintien mobile.
